# EUROPEAN PATENT APPLICATION

(11) **EP 1 770 941 A1**
(43) Date of publication of application: **04.04.2007**
(21) Application number: 05256158.6
(22) Date of filing: 30.09.2005
(51) Int. Cl.: H04L 29/06

(54) **Session communication with enhanced functionality**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

An exchange of initiation messages, requests and responses, are required for the setup of a digital communication session. The invention provides a method of using the requests and responses to provide courteous and detailed information about the purpose and reason of the requests and the responses. Thus, the parties to the communication session are provided with information for making an informed decision about future communication. The messages may be generated using the SIP protocol and the additional information regarding the purpose and the reason may be provided in a header field of the SIP message. The reasons can be entered by a user using a visual, haptic or audio interface at the time of the request or response, such that the reasons can be tailored to be suitable for the particular situation in which the request or response is made.

## Description

The invention relates to a method and user agent for conveying reasons for upgrading, changing, accepting, rejecting and requesting a communication session.

### Background of Invention

In telecommunication services today the boundaries between different media such as video, telephony, email and text are disappearing. Telephone conversations can these days be merged with video applications such that the two parties to the conversation can see, as well as hear, one another. Moreover, communication sessions on digital networks encompass more variety than traditional telephony, such as text chat, gaming, online banking and purchases, chat rooms and collaborative working.

Both traditional telephony services and digital communication services suffer from a lack of screening functionality available to the user for screening incoming calls and other types of communication sessions and also a lack of information available to a caller when a call is not answered. In communication services where the service does not require a real-time connection, a message can be transmitted irrespective of whether the recipient is available at that moment to receive the message. Moreover, the recipient can choose to answer the more urgent messages first and leave the less urgent messages for later. In telephony services, on the other hand, the user does not know of the purpose of the telephone call until he already has accepted the call and consequently, he cannot leave the less urgent calls for later. Moreover, if the recipient is not available to take the call, the caller cannot deliver the message and is not given any information about when the recipient might be available again.

A number of solutions to these problems have been suggested and/or tried and many of the solutions have to some extent been successful although they do not solve the problems fully and address specific media types only. For example, the use of short, frequent signals when the recipient of a call is already talking on the phone and the use of longer, less frequent signals when no one is available to answer the call have been used for a long time in traditional telephony services to provide the caller with information about the availability of the recipient. Moreover regarding telephone calls, the use of number displays for identifying the caller to the recipient are also available. However the display only provides the telephone number of the caller and not any information about the reason for the call.

The services mentioned above do not provide satisfactory functionality for screening incoming calls and other types of communication sessions. Neither do they provide satisfactory functionality for providing the caller with courteous and extended information about why his/her call request is being rejected and when a better time to call may be.

The present invention aims to address these issues.

### Summary of the Invention

According to the invention, there is provided a method of performing a communication session comprising: receiving at a user agent device instructions concerning the initiation of a communication session; receiving at the user agent device a reason for the instructions; and transmitting a session initiation message, selected in dependence on the instructions, the message conveying the reason for the instructions.

Receiving the instructions and the reason may comprise receiving instructions entered by the user using a visual, haptic and/or audio interface of the user agent device.

Moreover, previous reasons may be stored and the method may comprise searching for previous reasons in order to auto-complete the messages entered by the user using the interface.

According to the invention, there is also provided a method of performing a communication session comprising: receiving at a user agent device a session initiation message comprising instructions concerning the initiation of a communication session and data indicating a reason for the instructions; extracting the reason from the session initiation message; and communicating the reason to the user of the user agent device.

Communicating the reason to the user of the user agent device may comprise communicating the reason to the user of the user agent using a visual, audio and/or haptic interface.

The message may comprise a request for the initiation of a communication session or response to a request for initiation of a communication session. The message may be a SIP message and the reason may be included in a header of the Session Initiation Protocol (SIP) message.

Thus, the invention allows the screening of incoming requests for communication sessions and the recipient of the requests to provide extended and courteous information to the initiator of the request for further decisions on future communications.

According to the invention, there is further provided a user agent device for performing a communication session comprising: an interface for receiving instructions by a user concerning the initiation of a communication session and a reason for the instructions; and means for generating a session initiation message in dependence on the instructions, the message comprising the reasons for the instructions; and means for transmitting said message.

Yet further, according to the invention, there is provided a user agent device for performing a communication session comprising: means for receiving a session initiation message comprising instructions concerning the initiation of a communication session and data indicating a reason for the instructions; means for extracting the data indicating the reason from the session initiation message; and means for communicating the reason to the user of the user agent device.

The message may be a SIP message and the means for receiving a message may comprise an Internet interface.

Thus, the invention provides a near real-time messaging system to make requests and responses for the initiation of communication sessions.

### Brief Description of Drawings

Figure 1 is a schematic illustration of user and network equipment operable according to the invention;
Figure 2 is a schematic diagram of a personal computer (PC) for providing the user agent of Figure 1;
Figure 3 is a schematic illustration of a SIP message;
Figure 4 is a schematic illustration of the graphical user interface provided by the user agent to assist a user in initiating a communication session;
Figure 5 is a schematic illustration of the Graphical User Interface (GUI) provided by the user agent to allow a user to reject a request to establish a communication session;
Figure 6 illustrates the GUI of Figure 4 when the request to initiate a communication session is rejected;
Figure 7 is a schematic illustration of the GUI provided by the user agent to allow a user to accept a request to establish a communication session;
Figure 8 illustrates the GUI of Figure 4 when the request to initiate a communication session is accepted;
Figure 9 is a schematic illustration of the GUI provided by the user agent to facilitate a conference communication session;
Figure 10 shows the GUI of Figure 9 when one of the parties to the communication session has requested a change to the session;
Figure 11 is a flow diagram of a process of generating and transmitting a SIP message according to the invention;
Figure 12 is a flow diagram of a process of receiving and processing a SIP message according to the invention.

### Detailed Description

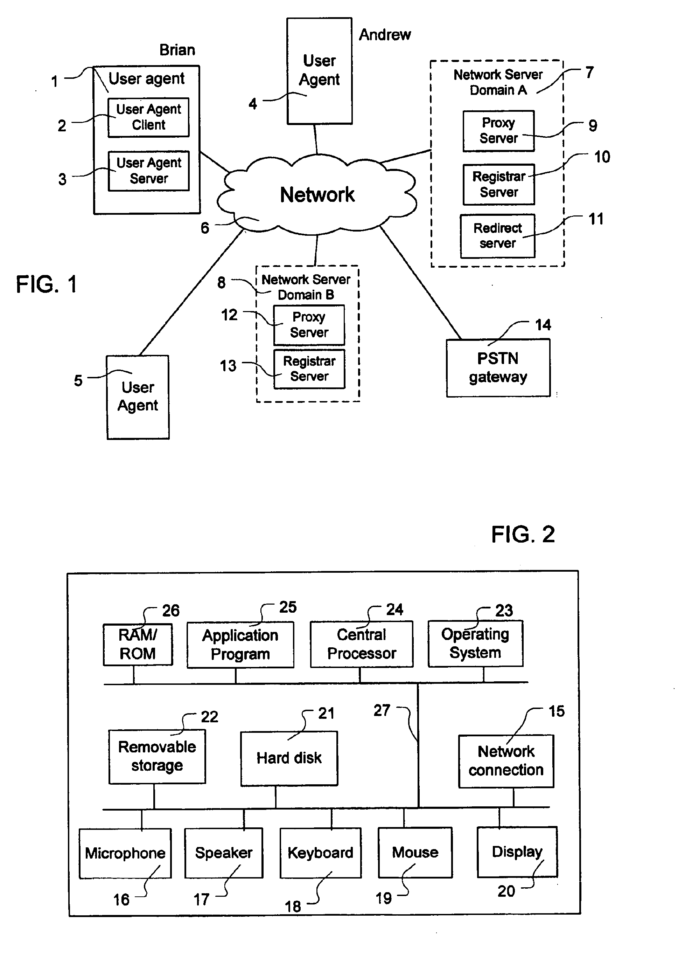

Referring to Figure 1, a system for providing a communication service, such as a Voice over Internet Protocol (VoIP) service, comprises a user agent 1 including a user agent client 2 and a user agent server 3. The role of the user agent client is to allow a user to initiate a voice communication session. The user agent server, on the other hand, responds to request for initiation from other user agents 4, 5 on behalf of the user. The user agent 1 communicates with the other user agents 4, 5 via a network 6. In this example, the SIP protocol is used for setting up, changing, and upgrading the communication sessions between user agents 1, 4 and 5. The SIP messages exchanged between the user agents are handled by network servers 7 and 8. Network server 7 is provided in the same domain, domain A, as user agent 1 and user agent 4 and it handles the SIP messages for all the user agents in that domain.

Network server 7 comprises a proxy server 9, a registrar server 10 and a redirect server 11. It is contemplated that the proxy server, the registrar server and the redirect server are provided in the same hardware. Alternatively, the three server components may be provided in separate hardware. Network server 8 is located in domain B and handles the messages from and to user agent 5, also located in domain B. Network server 8 also comprises a proxy server 12 and a registrar server 13. Proxy server 12 and registrar server 13 may be provided in the same hardware.

The user agent client 2 may include, but is not limited to a mobile telephone, a PC with telephony software, a Personal Digital Assistant (PDA) or a multimedia handset. The user agent server 3 includes software for managing the calls from the user agent client. The user agent client 2 and the user agent server 3 may be part of the same or separate hardware. The hardware for the user agent client and the user agent server will hereinafter be referred to as the user agent device.

The network 6 may include, but is not limited to, the public Internet, a LAN, a WAN or a 3G network for mobile phones. Although the set-up, change and upgrade of calls will be described hereinafter as being performed using the SIP protocol, a skilled person should understand that any suitable protocol may be used.

When a user, Brian, of user agent 1 attempts to initiate a VoIP call to user agent 4, which belongs to Andrew, user agent client 1 sends a SIP invite request to proxy server 9. User agent 4 has previously been registered with the proxy server and the details have been stored in the registrar server 10. Proxy server 9 obtains the IP address of user agent 4 from the registrar server 10 and forwards the request to user agent 4. User agent 4 subsequently responds to the request and proxy server 9 relays the response to user agent 1. If the response comprises instructions to accept the call, a point-to-point Real-Time Transport Protocol (RTP) connection between user agent 1 and user agent 4 is established. If, on the other hand, the response is a rejection of the call, no session is established.

If the user agent instead attempts to make a phone call to user agent 5, proxy server 9 redirects the phone call to domain B managed by proxy server 12. In this case, the proxy server 9 in domain A queries redirect server 11 to get the details of where to forward the invite request from user agent 1. The redirect server supplies the details of the proxy server 12 of domain B to the proxy server 9 of domain A. The invite request is forwarded to the proxy server 12 of domain B which queries the registrar server 13 of domain B for the IP address of user agent 5 and then forwards the invite request to user agent 5. User agent 5 responds to the request with a SIP response, which is forwarded by the proxy server of domain B to the proxy server of domain A, which in turn sends the response to user agent 1.

In this example, the redirect server 11 is located in domain A. However, the redirect server may be located in domain B instead. Alternatively, there may be one redirect server in each domain.

The SIP protocol can also be used to add a caller to an already established call. For example, if user agent 1 and user agent 5 are having a telephone conversation, either one of them can invite user agent 4 to join in the conversation. The call can also be transferred and upgraded. For example, a session using only voice communication can be upgraded to also comprise video. An invite request for using video is then sent to the other party and a response by the other party is received.

A gateway 14 to the Public Switched Telephone Network (PSTN) is connected to network 6 in order to allow the user agents to communicate with traditional telephone devices, which do not support VoIP.

Referring to Figure 2, an example of a PC acting as a user agent is shown. The PC comprises a network connection 15, including but not limited to a modem, a broadband and/or an ISDN interface, for connecting to the Internet 6. The client computer also comprises a microphone 16, speakers 17, a keyboard 18, a mouse 19 and a display 20, including, but not limited to, a cathode ray tube display or a liquid crystal display. It further comprises a hard disk 21 and means for retrieving digital data from a pre-recorded source, such as a CD-ROM or a floppy disk, schematically shown as removable storage 22. Additionally, the client computer comprises an operating system 23, a central processor 24, application programs 25 and a memory 26 including random access memory (RAM) and Read Only Memory (ROM). Communication between the internal components of the computer is achieved via a bus 27.

The application programs 25 include the software needed for providing the user agent client 2 and the user agent server 3. The software includes code for providing a GUI for allowing a user to control the user agent client and the user agent server. The mouse and the keyboard can be used for interacting with the GUI. The speaker 17 and the microphone 16 provide part of the hardware for allowing a user to make and receive calls. Contacts and the user profile settings for the VoIP service can be stored in memory 26. It is contemplated that the software for implementing the user agent, i.e. the computer program for performing the method according to the invention, can be downloaded from the network 6 via the network connection 15 or uploaded from the removable storage 22.

Even though a user agent is described being located on a personal computer, it should be understood that the user agent can be run on other platforms, such as a mobile telephone or a PDA.

According to the invention, the user can include a reason for the requested action in the session initiation messages relayed by the proxy servers. Thereby, the users can provide each other with courteous and extended information for further decisions on future communications.

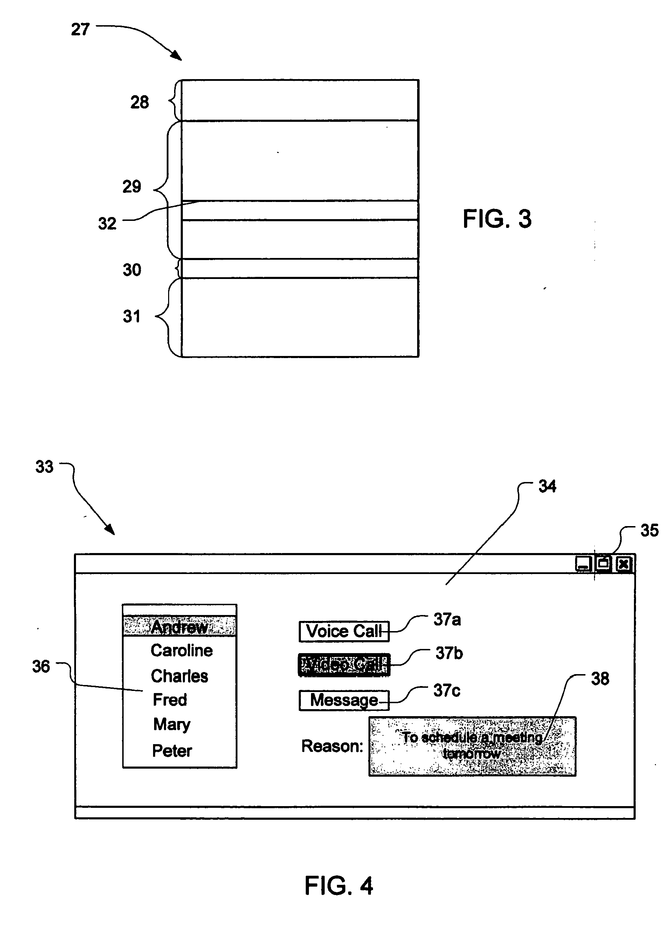

A typical SIP message is shown in Figure 3. SIP is an application-layer control protocol that can establish, modify and terminate multimedia sessions (conferences) or Internet telephony calls. SIP messages are typically of type request or response. A request invokes a method on the server. The most important methods include the Invite, ACK, Options, Bye, Cancel and Register methods. A response message is used to indicate the status of the server, success or failure. Responses come in six different classes, identified by the first digit of the status code of the response. A provisional response, class 1xx, is used by the server to indicate progress. For example, a provisional response can indicate that the server from which the response was transmitted is causing the user device to ring (response code: 180) or that a call is being forwarded (response code: 181). A final response, class 2xx and onwards, terminates a SIP request. Final responses include "Success" (response code 200), which indicates that the request was accepted, "Server Internal Error" (response code: 500), which indicates that an error in the responding server occurred, or "decline" (response code: 603), which indicates that the call was rejected.

As shown in Figure 3 a SIP message 15 comprises a start-line 28 indicating the type of message, a number of header fields 29, an empty line 30 indicating the end of the header fields and an optional message body 31. A SIP application does not need to understand all header fields in a received message. The application will just ignore headers that it does not understand. Thus, additional header fields can be added to a SIP message without the risk of existing applications not continuing to work. According to the invention, one of the header fields 32 is used to specify the reason for the request. The reason is given in natural language text format and can be specified by the user.

A graphical user interface, provided by the application programs 25, is used to initiate a call. The graphical user interface of the user agent also allows the user to specify the reason for initiating the call. An example of a graphical user interface 33 is shown in Figure 4. The graphical user interface 33 comprises a number of windows 34 including buttons 35 for maximising, minimising and closing the windows, as well known in the art.

A list of selectable contacts 36 is shown in the window 34. The contact may be retrieved from an electronic address book stored in the memory 26 of the user agent apparatus or in the network. After a contact from the list of contacts 36 has been selected, the user can choose from a number of options on how to contact the contact. The option may be represented by buttons, 37a-37c, that can be selected using an input device and may include, but are not limited to, an option to initiate a voice communication session, 37a, an option to initiate a video communication session, 37b, and an option to initiate an instant-message communication session, 37c. However, it should be understood that additional or fewer options may be offered. Examples of additional options include the options to use an email service, a short message service, a voice mail service and an option to start a conference call. It is contemplated that the options not available for a specific contact are not activated when that contact is selected. There is also provided a text field 37 in window 34 for entering the reason for the desired service. The reason can be entered using the keyboard of the PC. Alternatively, if the user agent is implemented in a mobile phone or a PDA, the keys of the mobile phone or PDA can be used to enter the reason. In yet another alternative, the reason can be spoken and speech recognition software may convert the speech into text to be sent with the SIP message.

Referring again to Figure 4, a user, Brian, wants to establish a video call to Andrew at user agent 4. Brian has entered a reason, "To schedule a meeting tomorrow", for the video call. After the button 37b representing the option to initiate a video call is selected using the mouse or the keys of the keyboard, the application program 25 generates and sends a SIP request message 27 with the reason included in text format in header field 32.

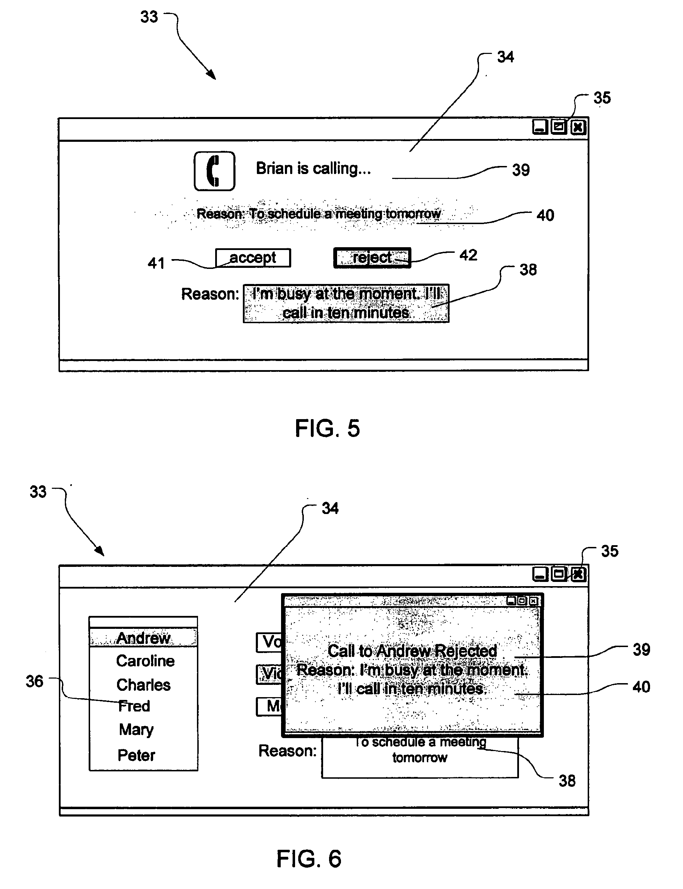

At Andrew's side, the application program 25 detects the incoming call and launches the VoIP application if not already launched. The application program may also generate a ringing signal that will alert Andrew to the incoming call. A window 34 showing the graphical user interface 33 is displayed on the screen of Andrew's user agent device as shown in Figure 5.

The GUI of Figure 5 comprises an area 39 indicating the method to which the incoming SIP message relates. In this case, since the incoming SIP message was an invite request for a voice call, the area displays the message "Brian is calling..." The graphical user interface also comprises a text area 40, below text area 39, for displaying the reason for the SIP request. Thus, the message "To schedule a meeting tomorrow" entered by Brian in text field 38 of Figure 4 is displayed here. The graphical user interface also comprises a button 41 for accepting the call and a button 42 for rejecting the call. A text field 38, similar to the text field 38 of Figure 4, is provided to allow Andrew to enter a reason for his response to Brian's invitation. In Figure 5, Andrew has entered a reason "I'm busy at the moment. I'll call in ten minutes" and has selected a reject button 42. When the reject button is clicked, the user agent 1 generates a SIP response message. The SIP response message is thereafter transmitted via the proxy server 9 to Brian's user agent 1. In this case, since Andrew has rejected the invitation, a SIP "Decline" response (response code: 603) is transmitted.

When Brian's user agent detects the incoming SIP response forwarded by a proxy server, it checks the number in a Call-ID header field to see which request the response relates to and it also checks the response code of the request to determine whether the response is a final response and, in that case whether the invitation was accepted or rejected. The user agent also extracts the reason for the response from the header field 32. The application program displays the reason to Brian. Referring to Figure 6, the application program displays information indicating whether the invitation was accepted or rejected 39 and the reason for the response 40 in an information window. Thus, Brian can make an informed decision about when Andrew will return the call. In a conventional telephony service, Brian would have heard a ringing sound with either short, frequent signals or longer, less frequent signals, informing Brian that Andrew is either on the phone or not available. The method, according to the invention, provides Brian with courteous and more detailed information.

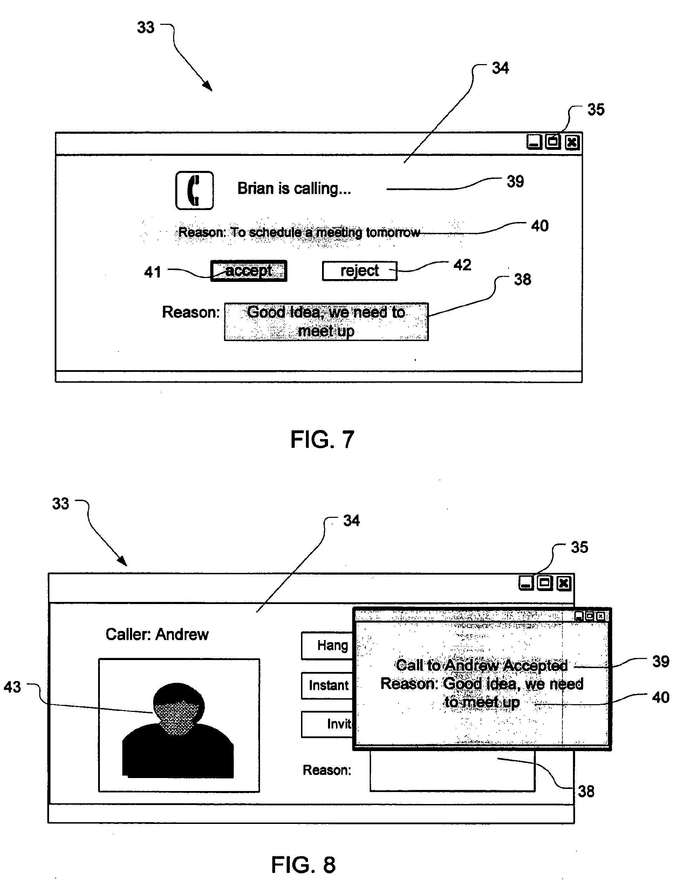

Referring to Figure 7, instead of rejecting the call, Andrew might instead decide to accept the call from Brian. In this case, Andrew selects the accept button 41. He may also enter a reason for accepting the call in text field 38. After selecting the accept button 41, the user agent generates a SIP response message (response code: 200), corresponding to an instruction to accept the call. The user agent also includes the reason in the header field 32 of the response and transmits the response via the proxy server to Brian's user agent.

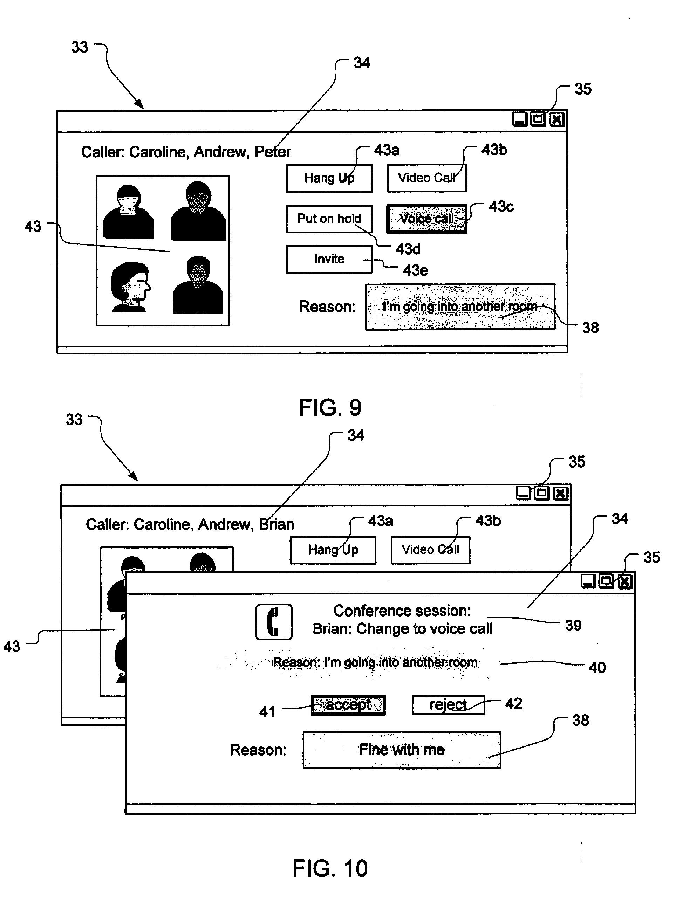

After Brian's user agent receives the response an acknowledgement message is transmitted and a point-to-point RTP session is established. The communication session can then be started. Referring to Figure 8, since Brian and Andrew agreed to have a video communication session, Brian will see a moving picture 43 of Andrew on his screen. Moreover, the outcome of the response and the reason for accepting the call is displayed in an information window in the foreground on Brian's screen. Behind the information window there are a number of selectable buttons for changing or ending the communication session, which will be described in more detail with respect to Figure 9.

Referring to Figure 9, Caroline, Brian, Andrew and Peter are all parties to an ongoing conference video call. A video image of each person is shown in area 43 of the window 34 of Brian's user agent 1. Next to area 43 there are a number of buttons for allowing the user to change the particulars of the communication session. The buttons represent an option to hang up 43a, i.e. to end the conversation, the option to change the session to a video call, an option to change the session to a voice call, an option to put the session on hold and an option to invite an additional party to the conference call. It should be realised by the skilled person that any number of suitable options may be provided and the options mentioned with respect to Figure 9 should not be interpreted as limiting the applicability of the invention. Since the session is already a video call, button 43b, providing an option for changing the session to a video call, is inactivated.

Brian has selected the option to request a change to the video communication session into a voice communication session. He has also entered a reason for his request in text field 38. The reason is "I'm going into another room". It is contemplated that a user of the system of Figure 1 has a number of user agent devices some of which have video capabilities, some of which are portable and some of which are stationary and only supports voice sessions, for example. Brian may have started the conference call using his PC but wants to move into a room where he only has access to his wireless telephone. He subsequently requests that the session be changed into a voice communication session. The parties to the conversation may be in the middle of a conversation and instead of interrupting the conversation he sends the reason for the change as part of the request. After Brian selects button 43c, a request is sent to all of the parties to the communication session.

Referring to Figure 10, Peter's user agent detects the incoming request, processes the request and displays a window informing Peter that Brian wants to change the communication session to a voice session. Peter's user agent also extracts the reason for the change and displays the reason in a window in the foreground of the GUI. The window also comprises buttons 41 and 42 for allowing Peter to accept or reject the request. It is contemplated that each of the parties to the conversation will receive a similar information message and the details of the message will vary depending on the GUI being used. If one of the user agents involved in the communication session does not support the method according to the invention, that user agent will just ignore the header including the reason. Thus, a user agent according to the invention, may still be able to communicate with a user agent not supporting the method according to the invention.

Before Peter selects the accept button he can also enter a reason for accepting or rejecting the change in text field 38. Referring to Figure 10, Peter has entered "Fine with me" in the text field. The response is subsequently transmitted to Brian who is informed of everyone's decisions and the reasons for their decisions. If everyone accepts Brian's request, the communication session changes into a voice session.

In this example, the application program includes a function for storing reasons previously entered in the reason field in memory. If desired, the program can also suggest a number of stored reasons, previously entered by the user, for the user to select from such that the user does not have to enter all the words and letter every time he wants to user a particular reason. Moreover, the program will attempt to auto-complete the reason from the first few letters entered by the user. For example, if the user often enters the reasons: "Sorry, I'm already on the phone. I'll call you back" or "Sorry, I'm in a meeting" when rejecting a call, the program remembers the reasons and when the user starts entering the word "Sorry", the user agent will suggest both reasons for the user to select. This feature is especially useful for user agent devices having small keyboards. The reasons may be stored both in the memory of the user agent device and in the personal profile for the user in the network. If the previously entered reasons are stored in the network, the reasons may be accessed from each of a user's user agents.

It should be realised that the specific reasons, and the specific situations in which the reasons are used, described with respect to Figures 5 to 10 are examples only. Any reason suitable, useful or appropriate for a particular situation can be used. For example, the reason for accepting a call may include conditions for accepting the call, such as "I'm accepting this call on the basis that you only want 2 minutes of my time" or "I'm in a meeting so make it short". Moreover, the reasons do not necessarily need to be limited to actual reasons. The information provided in the reason header may include jokes. The messages provided in the reason header may also provide the caller with information, which the recipient would not want to say out load in a particular situation. For example, if the user receives the call while on public transport, the reason might include: "I'm on the train, so don't ask me about anything personal I can't answer here".

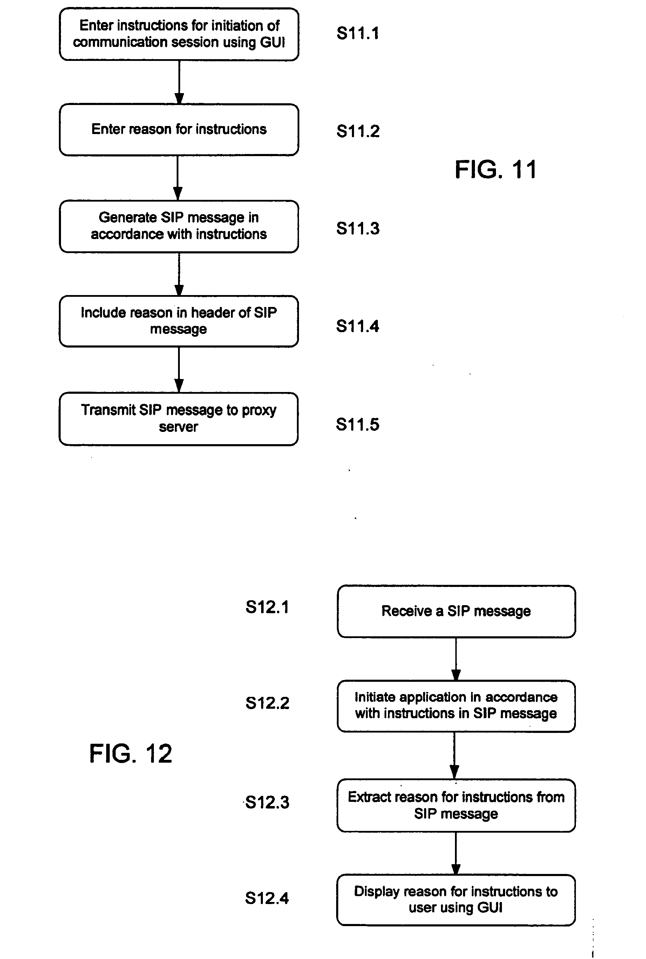

The method of sending instructions for the initiation of call according to the invention will now be described in more detail with respect to Figure 11.

At step S11.1, the user enters instructions for the initiation of a communication session using the graphical user interface in combination with the input means of the user agent device. The instructions include, but are not limited to, the set-up of a call, the upgrade, change or acceptance of a call or the rejection of a call. The input means may comprise keys on a mobile telephone, keyboard of a PC, mouse, touch pad, etc.

At step S11.2, the user also enters the reason for the instructions. The reasons may be entered in a text field or selected from a drop down menu. One example of entering the reasons includes the user starting to enter text in the text field and the software of the user agent attempting to auto-complete the reasons using previous entered reasons stored in memory.

At step S11.3, the user agent generates a SIP message in accordance with the instructions. For example, if the user selected an option in the GUI for dialling a contact, the user agent would generate an invite request. In contrast, if the user entered instructions using the GUI to accept a call, for example by clicking an accept call button, the GUI generates a response message of type 200, which means that the request is accepted. The message includes at least the details of the initiator of the message and the destination of the message. The message may also include the type of media supported by the initiating user agent and the type of media included in the body of the message.

The user agent also includes the reason in text format in one of the header fields 32 of the SIP message at step S11.4. At step S11.5, the message is transmitted to the proxy server.

The method of receiving an initiation message according to the invention will now be described in more detail with respect to Figure 12.

At step S12.1, the user agent detects and receives a SIP message. It checks the type and/or method of the message and initiates an application in accordance with the instructions of the SIP message. For example, if the SIP message is an invite request, the user agent will launch the VoIP application, if not already launched and open a new window in the graphical user interface for the new communication session. On the other hand, if the SIP message is a response including instructions to reject a request previously sent by the user of the user agent, the user agent may activate the window of the graphical user interface used to send the request and generate a message for displaying the response to the request. The user agent may also generate a sound for alerting the user to the incoming instructions.

At step S12.3, the reason for the instructions are extracted from the header 32 of the SIP message and at step S12.4 the reason is displayed in the graphical user interface of the user agent. It is contemplated that in an alternative embodiment, the reason may be read out using computer generated speech.

The invention has been described with respect to an embodiment involving VoIP communication and a GUI for entering the reasons. However, it should be realised by a skilled person that the user interface does not necessarily have to be graphical. The user interface can also be an audio interface or a haptic interface or a combination of at least two out of a visual, an audio and a haptic interface. Moreover, the communication session does not necessarily have to be a VoIP session. Other types of communication sessions, in which the reason for the requests and responses can be included in the session initiation messages according to the invention include, but are not limited to, video communication, communication sessions providing text chats, visual communication sessions for the deaf, haptic communication sessions, online gaming sessions, banking and online purchasing sessions, collaborative working, chat rooms or access to services, for example an online photo printing service.

Moreover, the reasons do not have to be user-specific and entered manually at the time of the request/response. The reasons can be generated in dependence on previously stored rules. For example, if a user is away on holiday, he may have instructed the user agent server to inform everyone requesting a communication session of his user agent to inform them that he is on holiday. An example of a suitable reason to be sent by the user agent server to the initiator of the request may then be "I am on holiday, will be back next week". Moreover, if a user knows that he will get home at a certain time in the evening he may instruct his user agent server at home to respond to all requests with the time he will be home. An example of an appropriate reason, in this situation, may be "This is the electronic butler, Andrew is expected home in 20 minutes".

Additionally, the user client may be located in the network instead of being a separate device belonging to a user, i.e. the user agent may be a "thin client". The user agent device may then be a web browser or Macromedia Flash player that is simply rendering, or streaming if the media includes audio and video, the service features, which reside in the network.

## Claims

1. A method of performing a communication session comprising
receiving at a user agent device (1) instructions concerning the initiation of a communication session;
receiving at a user agent device (1) a reason for the instructions; and
transmitting a session initiation message (27), selected in dependence on the instructions, the message conveying the reason for the instructions.

2. A method according to claim 1, wherein receiving the instructions and the reason comprises receiving instructions entered by the user using a visual, haptic and/or audio interface (33) of the user agent device (1).

3. A method according to claim 2, wherein previous reasons are pre-stored and the method comprises searching for previous reasons in order to auto-complete the reasons entered by the user using the interface (33).

4. A method according to claim 1, wherein receiving at a user agent device a reason for the instructions comprises a processor of the user agent device retrieving or generating a currently appropriate message based on a set of predetermined rules.

5. A method according to any one of the preceding claims, wherein the message (27) comprises a request for the initiation of a communication session or a response to a request for initiation of a communication session.

6. A method according to any one of the preceding claims, wherein the message (27) is a SIP message.

7. A method according to claim 6, wherein the reason is included in a header field (32) of the SIP message (27).

8. A method of performing a communication session comprising:
receiving at a user agent device (1) a session initiation message (27) comprising instructions concerning the initiation of a communication session and data indicating a reason for the instructions;
extracting the data indicating a reason from the session initiation message (27); and
communicating the reason to the user of the user agent device (1).

9. A method according to claim 8, wherein communicating the reason to the user of the user agent device (1) comprises communicating the reason to the user using a visual, audio and/or haptic user interface of the user agent device (1).

10. A method according to claim 8 or 9, wherein the message (27) comprises a request for the initiation of a communication session or a response to a request for initiation of a communication session.

11. A method according to any one of claims 8 to 10, wherein the message is a SIP message.

12. A method according to claim 11, wherein the reason is included in a header field (32) of the SIP message.

13. A computer program comprising instructions, which when executed by a processor causes the processor to perform the method according to any one of the preceding claims.

14. A user agent device (1) for performing a communication session comprising:
a user interface (33) for receiving instructions by a user concerning the initiation of a communication session and a reason for the instructions;
means (25) for generating a session initiation message (27) in dependence on the instructions, the message comprising the reasons for the instructions; and
means (15) for transmitting said message (27).

15. A user agent device according to claim 14, wherein the message (27) is a SIP message.

16. A user agent device according to claim 14 or 15, wherein the means for transmitting a message (15) comprises an Internet interface.

17. A user agent device according to any one of claims 14 to 16, configured to perform a packetised communication session.

18. A user agent device according to claim 17, wherein the packetised communication session is a VoIP communication session.

19. A user agent device (1) for performing a communication session comprising
means (15) for receiving a session initiation message (27) comprising instructions concerning the initiation of a communication session and data indicating the reason for the instructions;
means for extracting the data indicating the reason from the session initiation message (27); and
means (33, 20) for communicating the reason to the user of the user agent device (1).

20. A user agent device according to claim 19, wherein the means for communication the reason (33, 20) to the user of the user agent comprises a visual, audio and/or haptic user interface (33).

21. A user agent device according to claim 19 or 20, wherein the message (27) is a SIP message.

22. A user agent device according to any one of claims 18, 19 or 20, wherein the means for receiving a message (15) comprises an Internet interface.

23. A user agent device according to any one of claims 19 to 22, configured to perform a packetised communication session.

24. A user agent device according to claim 23, wherein the packetised communication session is a VoIP communication session.

25. A method or computer program according to any one of claims 1 to 13, wherein the communication session is a packetised communication session.

26. A method or computer program according to claim 25, wherein the packetised communication session is a VoIP communication session.
